# EUROPÄISCHE PATENTSCHRIFT

(11) **EP 2 501 591 B1**
(45) Veröffentlichungstag und Bekanntmachung des Hinweises auf die Patenterteilung: **14.08.2013**
(21) Anmeldenummer: 10760297.1
(22) Anmeldetag: 21.09.2010
(51) Int. Cl.: B60S 1/40, B60S 1/38

(54) **ADAPTER ZUM VERBINDEN EINES VERBINDUNGSELEMENTS AM ENDE EINES WISCHARMS MIT EINEM WISCHBLATT INSBESONDERE IN FLACHBALKENBAUWEISE**
ADAPTER FOR CONNECTING A CONNECTING ELEMENT AT THE END OF A WIPER ARM TO A WIPER BLADE IN PARTICULAR OF FLAT BEAM CONSTRUCTION
ADAPTATEUR POUR RACCORDER UN ÉLÉMENT DE RACCORDEMENT, SITUÉ À L'EXTRÉMITÉ D'UN BRAS D'ESSUIE-GLACE, À UN BALAI D'ESSUIE-GLACE, EN PARTICULIER DE STRUCTURE À BARRE PLATE

(30) Priorität: 17.11.2009 DE 102009046788; 21.09.2010 DE 102010041152
(43) Veröffentlichungstag der Anmeldung: 26.09.2012
(73) Patentinhaber: Robert Bosch GmbH, 70442 Stuttgart (DE)
(72) Erfinder: DEPONDT, Helmut, B-3010 Kessl-Lo (BE)
(86) Internationale Anmeldenummer: PCT/EP2010/063918
(87) Internationale Veröffentlichungsnummer: WO 2011/060979

(56) Entgegenhaltungen:
- EP-A2- 1 995 130
- DE-A1-102007 058 091
- DE-U1-202005 021 307
- DE-U1-202008 011 314

## Beschreibung

### Stand der Technik

Die Erfindung geht aus von einem Adapter zum Verbinden eines Verbindungselements am Ende eines Wischarms mit einem Wischblatt insbesondere in Flachbalkenbauweise nach dem Oberbegriff des Anspruchs 1.

Aus der DE 20 2005 021 307 U1 ist eine Anschlussvorrichtung zum gelenkigen Verbinden eines Wischblatts in Flachbalkenbauweise bekannt, die für verschiedene Wischarme geeignet ist. Die Anschlussvorrichtung umfasst mindestens ein einteiliges oder mehrteiliges Anschlusselement, das fest, aber lösbar mit einem Tragelement in Form von Federschienen befestigt ist. Zwischen je einem Wischarm und dem Wischblatt ist ein Adapter vorgesehen, der einerseits Anschlussmöglichkeiten für das Anschlusselement und andererseits Anschlussmöglichkeiten für einen der Wischarme bzw. für Verbindungselemente besitzt, die mit dem jeweiligen Wischarm fest verbunden oder an diesem angeformt sind. Ein Gelenk, dessen Gelenkachse sich quer zur Längsrichtung des Wischblatts erstreckt, ist zwischen einem der Verbindungselemente und einem Adapter angeordnet, der drehfest mit dem Anschlusselement verbunden ist, oder zwischen einem mit dem Anschlusselement drehfest verbundenen Teil des Adapters und einem mit dem Verbindungselement drehfest verbundenen Teil des Adapters. Somit ergeben sich für drei verschiedene Verbindungselemente der Wischarme drei verschiedene Adapter.

Die Anschlussvorrichtung eignet sich für einen Wischarm mit einem hakenförmigen Ende bzw. Verbindungselement oder einem Ende bzw. Verbindungselement mit einem seitlichen Lagerstift und einer Brücke entsprechend einem bekannten Sidelockprinzip oder einem Wischarm mit einem Ende bzw. Verbindungselement, bei dem der Wischarm im Wesentlichen gradlinig oberhalb des Wischblatts verläuft und nach dem Toplock-Prinzip mit dem Anschlusselement verbunden ist.

Nach der EP 1 995 130 A2 ist ein Wischblatt mit einem gattungsmäßigen Adapter zum Verbinden eines Verbindungselements am Ende eines Wischarms mit dem Wischblatt bekannt. Ein Ausführungsbeispiel zeigt ein Wischblatt in Flachbalkenbauweise, wobei der Adapter ein Basiselement besitzt. Dieses weist ein u-förmiges, aus einem Boden und zwei Seitenwänden gebildetes Querschnittprofil auf, das an seiner dem Wischarm abgewandten Stirnseite von einer Verschlusskappe abgeschlossen ist. An den Seitenwänden des Basiselements sind Federarme mit Tasten angeformt, die sich in Längsrichtung zur Verschlusskappe erstrecken und in diese eingreifen können.

### Offenbarung der Erfindung

Das Basiselement weist ein u-förmiges, aus einem Boden und zwei Seitenwänden gebildetes Querschnittprofil auf, das an seiner dem Wischarm abgewandten Stirnseite von einer Verschlusskappe abgeschlossen ist. An den Seitenwänden des Basiselements sind Federarme angeformt, die sich in Längsrichtung erstrecken, in die Verschlusskappe eingreifen können. Nach der Erfindung sind in Seitenwänden der Verschlusskappe Aussparungen vorgesehen, in dieTasten an den Federarmen einrasten. Beispielsweise können die Aussparungen als Öffnungen oder als Vertiefungen gestaltet sein, sodass die Tasten im ersten Fall durch die Öffnungen betätigt werden können, während sie im zweiten Fall nach außen durch die Seitenwände verdeckt sind und durch ein Werkzeug gelöst werden können. Ferner sind an den Innenseiten der Seitenwände der Verschlusskappe längs gerichtete Riegel angeordnet, die in Aussparungen der Seitenwände des Basiselements verschiebbar geführt sind, sofern die Tasten der Federarme nicht in den Aussparungen in den Seitenwänden der Verschlusskappe eingerastet sind. Im geschlossenen Zustand, wenn die Tasten in den Aussparungen der Seitenwände der Verschlusskappe eingerastet sind, unterbrechen die Riegel quer verlaufende Montagespalte und schließen dabei Aufnahmeräume für Sicherungsnocken ab. Durch diese Einrichtung können Verbindungselemente von

Wischarmen oder eine Abdeckkappe verliersicher mit dem Adapter verbunden werden. Dieser kann seinerseits in üblicher Weise an ein am Wischblatt befestigtes Anschlusselement montiert werden.

Zur Montage werden die entsprechenden Wischarme bzw. ihre ersten oder zweiten Verbindungselemente, die ein zum Adapter hin offenes, u-förmiges Querschnittprofil aufweisen und an ihren unteren Kanten ihrer Seitenwände nach innen weisende Sicherungsnocken besitzen, in Richtung einer Hochachse in die Montagespalten der Seitenwände des Basiselements eingeführt und bis in Aufnahmeräume an den Enden der Montagespalten geschoben, wobei die Verschlusskappe eine geöffnete Position einnimmt. Wenn sich die Sicherungsnocken in den Aufnahmeräumen befinden, wird die Verschlusskappe geschlossen, wobei die Riegel die Montagespalten oberhalb der Aufnahmeräume unterbrechen, sodass sich die Sicherungsnocken nicht mehr aus den Aufnahmeräumen lösen können. In der Endposition rasten die Tasten, die sich an den Enden der mit dem Basiselement verbundenen Federarme befinden, in die Aussparungen der Seitenwände der Verschlusskappe ein, sodass die Verschlusskappe gegen ein unbeabsichtigtes Öffnen gesichert ist.

Zur Demontage werden die Tasten nach innen gedrückt, sodass die Verschlusskappe wieder in die geöffnete Position geschoben werden kann und die Riegel die Montagespalten freigeben. Zweckmäßigerweise begrenzt ein Anschlag den Öffnungsweg, damit die Riegel bei der Montage und Demontage des Adapters nicht unbeabsichtigt aus den Aussparungen des Basiselements gleiten können, in denen sie geführt sind.

Gemäß einer Ausgestaltung der Erfindung wird vorgeschlagen, dass die Riegel im geschlossenen Zustand mit ihren freien Enden in Aussparungen an den den Stirnseiten der Riegel gegenüberliegenden Seiten der Montagespalten eingreifen. Dadurch sind die Riegel im geschlossenen Zustand auch an ihren freien Enden abgestützt, wodurch sie auch hohen Stoßbelastungen widerstehen können. Dabei ist es zweckmäßig, wenn die Aussparungen jeweils an einem ihrer Ränder eine Raste besitzen, die mit einer Rastkante am freien Ende der Riegel verrastet und diese nur bei einer erhöhten Lösekraft in Längsrichtung der Riegel freigibt.

Die Federarme verlaufen zweckmäßigerweise relativ zu den Seitenwänden nach außen versetzt und bilden so Absätze, die als Anschläge für Stirnseiten des dritten oder vierten Verbindungselements dienen.

Um das Spiel zwischen dem Verbindungselement und dem Adapter zu minimieren, ist es zweckmäßig, dass der Adapter eine Spielausgleichstaste an seinem dem Wischarm zugewandten Ende besitzt, die über eine Federzunge mit einem Zwischenboden verbunden ist, der die beiden Seitenwände des Basiselements verbindet. Die Spielausgleichstaste wirkt mit einer passenden Öffnung des entsprechenden ersten oder zweiten Wischarms zusammen. Die Spielausgleichstaste kann vorteilhafterweise an der den Federarmen zugewandten Seite eine Rastkante aufweisen und als weiteres Sicherungsmittel für das erste oder zweite Verbindungselement dienen. Ferner besitzt das Basiselement im Bereich der Spielausgleichstaste eine Spielausgleichsnische an den Außenseiten der Seitenwände. Diese können mit ersten Spielausgleichsrippen entsprechender Wischarme, z.B. des ersten Verbindungselements des ersten Wischarms, zusammenwirken und das seitliche Spiel des Wischblatts minimieren. Schließlich kann das Basiselement im Bereich der Federzunge an den Außenwänden seiner Seitenwände Spielausgleichsflächen aufweisen, die mit zweiten Spielausgleichsrippen entsprechender Wischarme, z. B. des zweiten Verbindungselements des zweiten Wischarms, zusammenwirken und ebenfalls das seitliche Spiel des Wischblatts minimieren. Die Spielausgleichsflächen sind vom Boden des Basiselements ausgehend zur oberen Kante der Seitenwände leicht nach innen geneigt, um die Montage zu erleichtern.

In einer weiteren Ausbaustufe umfasst der Adapter eine Abdeckkappe, die ein u-förmiges, aus einem Boden und zwei Seitenwänden gebildetes Querschnittprofil aufweist, das mit seinen Seitenwänden und seiner Deckwand das Basiselement seitlich und von oben umfasst. Die Abdeckkappe schließt mit ihrer Stirnseite an die gegenüberliegende Stirnseite der Verschlusskappe bündig an, wobei in montiertem Zustand Sicherungsnocken an den Innenseiten der Seitenwände der Abdeckkappe in die Aufnahmeräume am Ende der Montagespalten des Basiselements eingreifen. Die dem Wischarm zugewandte Stirnseite der Abdeckkappe weist eine Öffnung auf. Diese dient zur Montage weiterer unterschiedlicher Wischarme.

Zur Sicherung entsprechender Wischarme weist die Abdeckkappe an ihrem dem Wischarm zugewandten Ende seitliche, nach innen federnd nachgiebige Verrastungsflügel auf, die zur Verschlusskappe weisende Anschlagschrägen und etwa senkrecht zur Längsrichtung verlaufende Anschläge besitzen. Zum gleichen Zweck wird nach einer weiteren Ausgestaltung der Erfindung vorgeschlagen, dass die Abdeckkappe im Bereich ihrer stirnseitigen dem Wischarm zugewandten Öffnung einen Rastnocken besitzt. Dieser wirkt mit einem entsprechenden Rastloch des zugeordneten fünften Wischarms zusammen.

Während der dritte bis sechste Wischarm mit den entsprechenden dritten bis sechsten Verbindungselementen montiert werden können, wenn der Adapter im Wesentlichen parallel zum Wischblatt verläuft, wird der Adapter zur Montage des ersten oder zweiten Wischarms um einen Winkel α, vorzugsweise zwischen 4° und 8°, zum freien Ende des Wischblatts gedreht. Durch den unterschiedlichen Montagewinkel α erhält man einen ausreichenden Freiraum für die Montage des ersten und zweiten Wischarms. Ferner ist es möglich, die dritten bis fünften Verbindungselemente durch die stirnseitige Öffnung in den Adapter einzuführen und die Spielausgleichstaste nach unten zu drücken.

Um einen Wischarm nach dem Sidelockprinzip montieren zu können, besitzt das Basiselement eine nach oben offene Nabe, die von den Seitenwänden des Basiselements überragt wird, wobei die Seitenwände im Bereich der Nabe klippartig ausgebildet sind, und die Abdeckkappe mindestens in einer Seitenwand eine zur Nabe fluchtende Lageröffnung besitzt.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: in einer perspektivischen Teilansicht sechs Wischarmenden in einer Zusammenstellung und ein Wischblatt mit einem erfindungsgemäßen Adapter,
- Fig. 2: in einer perspektivischen Teilansicht die sechs Wischarmenden nach Fig. 1 montiert an dem erfindungsgemäßen Adapter,
- Fig. 3: den erfindungsgemäßen Adapter in einer perspektivischen Explosionsdarstellung,
- Fig. 4: den erfindungsgemäßen Adapter nach Fig. 3 zusammengebaut,
- Fig. 5 und Fig. 6: einen ersten Wischarm während der Montage an einen erfindungsgemäßen Adapter,
- Fig. 7: einen zweiten Wischarm während der Montage an einen erfindungsgemäßen Adapter,

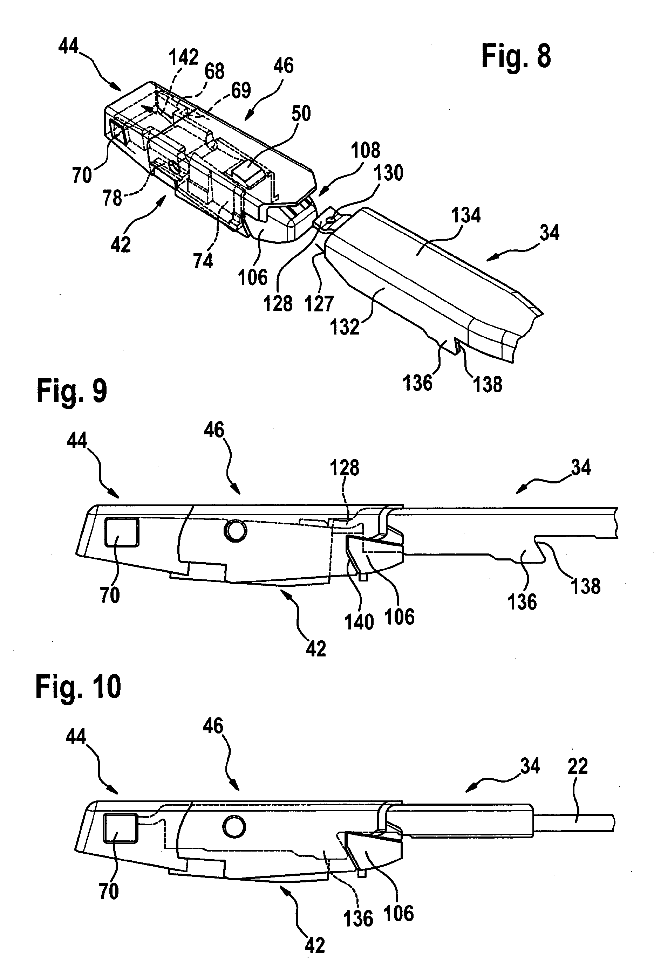

- Fig. 8 bis Fig. 10: einen dritten Wischarm während der Montage an einen erfindungsgemäßen Adapter,

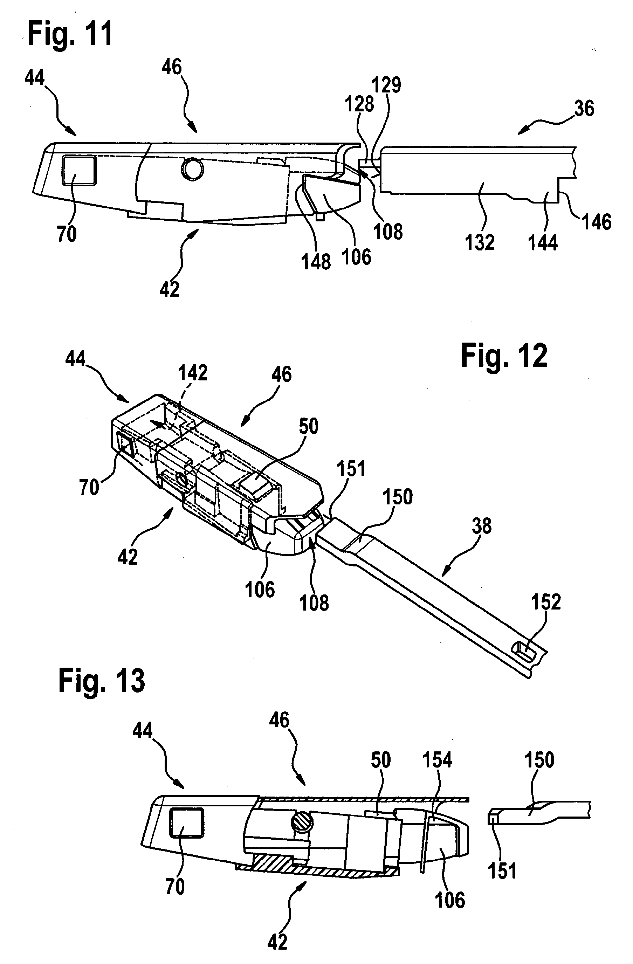

- Fig. 11: einen vierten Wischarm während der Montage an einen erfindungsgemäßen Adapter,
- Fig. 12 und Fig. 13: einen fünften Wischarm während der Montage an einen erfindungsgemäßen Adapter und

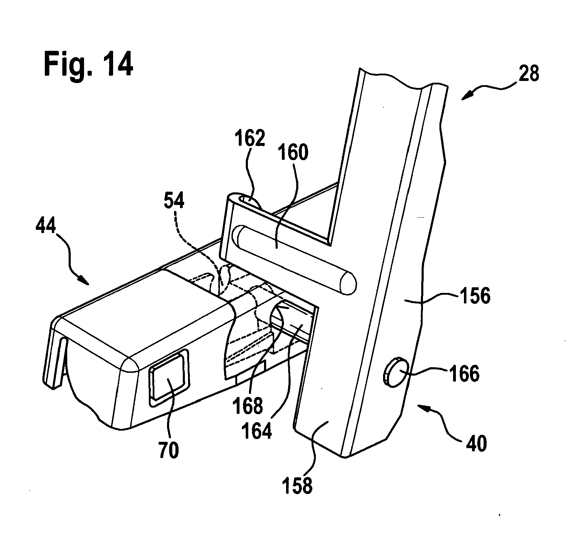

- Fig. 14: einen sechsten Wischarm während der Montage an einen erfindungsgemäßen Adapter.

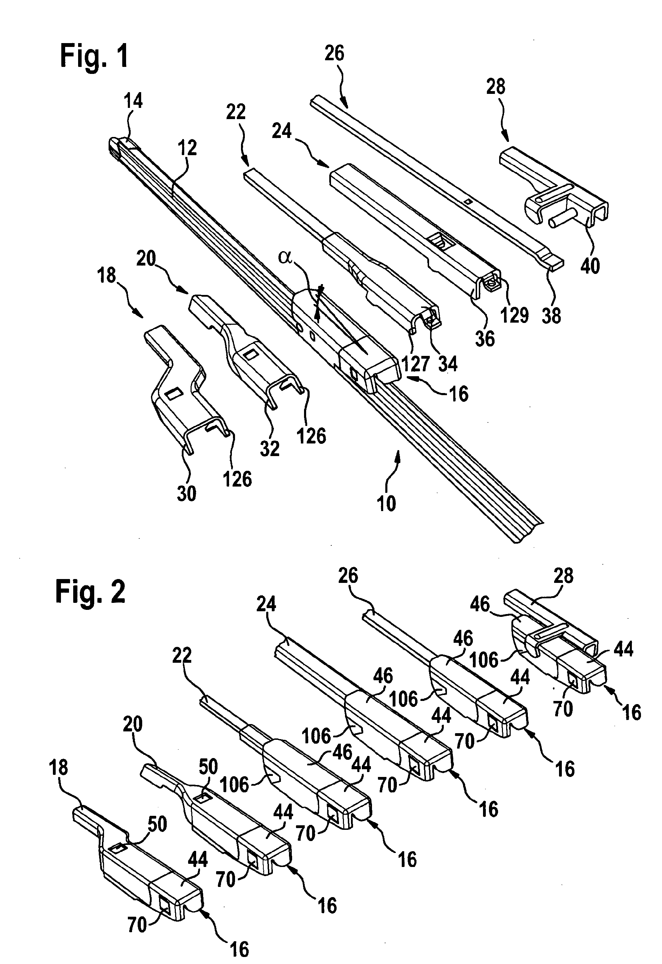

Das in Fig. 1 dargestellte Wischblatt 10 besitzt eine Wischleiste, die von einem Spoiler 12 überdeckt ist, der an seinen Enden Endkappen 14 besitzt. Der Spoiler 12 ist in üblicher Weise mit der nicht sichtbaren Wischleiste über ein Tragelement in Form einer oder mehrerer Federschienen verbunden, die ebenfalls nicht sichtbar sind. An dem Tragelement ist in üblicher Weise ein Anschlusselement befestigt, auf dem ein Adapter 16 sitzt. Der Adapter 16 dient zum gelenkigen Verbinden des Wischblatts 10 mit sechs verschiedenen Wischarmen 18, 20, 22, 24, 26 und 28. Diese haben unterschiedliche Verbindungselemente 30, 32, 34, 36, 38 und 40, die mit dem Adapter 16 lösbar verbunden werden. Die Verbindungselemente 30, 32, 34, 36, 38, 40 können integrale Bestandteile der Wischarme 18, 20, 22, 24, 26, 28 oder als einzelne Bauelemente mit den Wischarmen 18, 20, 22, 24, 26, 28 fest verbunden sein. Fig. 2 zeigt die sechs Wischarme 18, 20, 22, 24, 26, 28 montiert an dem Adapter 16.

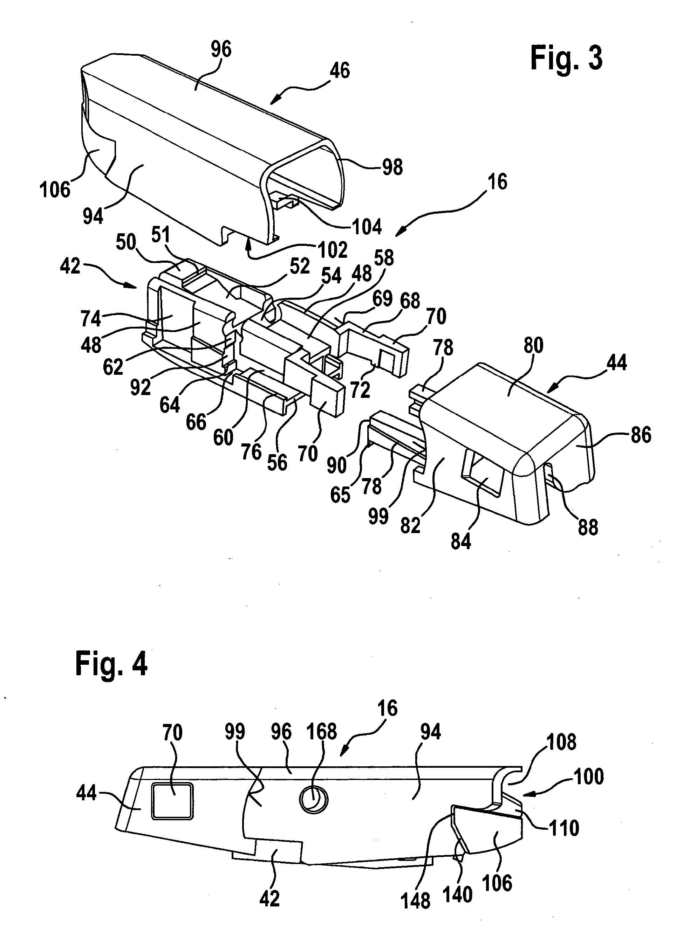

Der Adapter 16 umfasst zum Verbinden mit einem ersten Wischarm 18 oder einem zweiten Wischarm 20 ein Basiselement 42 und eine Verschlusskappe 44, während zum Verbinden mit einem dritten Wischarm 22 oder vierten Wischarm 24 oder fünften Wischarm 26 oder sechsten Wischarm 28 eine Abdeckkappe 46 erforderlich ist. Die Einzelteile des Adapters 16 sind in Fig. 3 dargestellt. Das Basiselement 42 besitzt zwei Seitenwände 48, die durch einen Boden 56 und einen Zwischenboden 58 miteinander verbunden sind und diesen in Richtung einer Hochachse überragen. Die von den Wischarmen 18, 20, 22, 24, 26, 28 abgewandte Stirnseite des Basiselements 42 wird von der Verschlusskappe 44 abgedeckt. Diese besitzt ein u-förmiges Querschnittprofil, das zum Spoiler 12 hin offen ist und von zwei Seitenwänden 82 und einer diese verbindenden Deckwand 80 gebildet wird. Zum freien Ende hin besitzt die Verschlusskappe 44 eine Stimwand 86 mit einem Anschlussprofil 88 für den Spoiler 12. An den Innenseiten der Seitenwände 82 sind Riegel 78 angeformt, die in Längsrichtung 124 verlaufen und in montiertem Zustand in Aussparungen 60 an den Außenseiten der Seitenwände 48 des Basiselements 42 längs verschiebbar geführt sind. Die Aussparungen 60 werden nach unten durch den Boden 56 begrenzt, der an seinen Längsseiten im Bereich der Aussparungen 60 Führungskanten 76 aufweist.

Wenn die Verschlusskappe 44 geschlossen ist, reichen die Riegel 78 über quer zu ihnen verlaufende Montagespalten 62 in den Seitenwänden 48 des Basiselements 42. Die Riegel 78 unterbrechen im geschlossenen Zustand die Montagespalten 62, sodass sich zum Boden 56 hin am Ende der Montagespalten 62 Aufnahmeräume 66 bilden. Um den Riegeln 78 an ihren freien Enden einen sicheren Halt zu geben, sind an den den Stirnseiten 90 der Riegel 78 gegenüberliegenden Seiten der Montagespalten 62 Aussparungen 92 vorgesehen, in die die Riegel 78 ein Stück weit eingreifen und durch Rastkanten 65 im Bereich ihrer Stirnseite 90 mit Rasten 64 an den unteren Kanten der Aussparungen 92 verrasten.

An der der Verschlusskappe 44 zugewandten Stirnseite des Basiselements 42 sind an den Seitenwänden 48 in Längsrichtung verlaufende Federarme 68 angeformt. Diese verlaufen nach außen versetzt zu den Seitenwänden 48 des Basiselements 42 und besitzen an ihren freien Enden seitlich nach außen weisende Tasten 70, die in der Endposition (Fig. 4) in Aussparungen 84 in den Seitenwänden 82 der Verschlusskappe 44 von innen einrasten. Durch den Versatz bilden die Federarme 68 Absätze 69, die als Anschläge für Stirnseiten 127, 129 des dritten oder vierten Verbindungselements 34, 36 des dritten bzw. vierten Wischarms 22, 24 dienen.

Die Aussparungen 84 der Verschlusskappe 44 können als Öffnungen oder Vertiefungen gestaltet sein. Die Federarme 68 fixieren die endgültige Montageposition der Verschlusskappe 44. Ferner besitzen sie mindestens einen Anschlag 72, wodurch die Öffnungsbewegung der Verschlusskappe 44 begrenzt wird, sodass die Riegel 78 auch im geöffneten Zustand der Verschlusskappe 44 in den Aussparungen 60 des Basiselements 42 geführt bleiben. Dadurch wird die Montage und Demontage der Wischarme 18, 20 sowie der Abdeckkappe 46 wesentlich vereinfacht.

Das Basiselement 42 besitzt im Bereich seiner wischarmseitigen Stirnseite zur Montage des ersten Wischarms 18 und des zweiten Wischarms 20 eine Spielausgleichstaste 50, die über eine Federzunge 52 mit dem Zwischenboden 58 verbunden ist. Die Spielausgleichstaste 50 kann ferner als zusätzliches Sicherungsmittel des Adapters 16 dienen. Hierfür ist es zweckmäßig, dass sie an der den Federarmen 68 zugewandten Seite eine Rastkante 51 aufweist. Im Bereich der Spielausgleichstaste 50 sind außerdem in den Außenseiten der Seitenwände 48 Spielausgleichsnischen 74 vorgesehen, in die die zweiten Spielausgleichsrippen 118 des zweiten Verbindungselements 32 des zweiten Wischarms 20 passen. In Längsrichtung 124 schließen sich an die Spielausgleichsnischen 74 Spielausgleichsflächen 47, 49 an, die mit ersten Spielausgleichsrippen 117 des ersten Verbindungselements 30 des ersten Wischarms 18 zusammenwirken. Die Spielausgleichsflächen 47, 49 sind ausgehend von dem Boden 56 des Basiselements 42 zu den oberen Kanten der Seitenwände 48 hin leicht nach innen geneigt, um die Montage des ersten Verbindungselements 30 zu erleichtern. Die Spielausgleichsnischen 74 sowie die Spielausgleichsflächen 47, 49 minimieren zusammen mit den ersten und zweiten Spielausgleichsrippen 117, 118 das seitliche Spiel des Wischblatts 10 und gewährleisten somit eine präzise seitliche Führung des Wischblatts 10.

Für die Montage des sechsten Wischarms 28 mit einem sechsten Verbindungselement 40 an einem Wischblatt 10 nach einem Sidelockprinzip besitzt das Basiselement 42 am offenen Ende der Montagespalten 62 im Zwischenboden 58 eine offene Nabe 54, die von den Seitenwänden 48 überragt wird, wobei die überstehenden Teile der Seitenwände 48 als Klippse ausgebildet sind, um einen Lagerzapfen 164 des sechsten Verbindungselements 40 in der Nabe 54 zu halten.

Die Abdeckkappe 46 besitzt ein zum Basiselement 42 hin offenes, u-förmiges Querschnittprofil, das von zwei Seitenwänden 94 und einer Deckwand 96 gebildet wird, die die Seitenwände 94 miteinander verbindet. Die Seitenwände 94 haben an ihren unteren, dem Basiselement 42 zugewandten Längskanten Aussparungen 102, sodass sich die Seitenwände 94 bündig an die Führungskanten 76 des Zwischenbodens 58 anschließen. Ebenfalls schließt sich die konvex gestaltete Stirnseite 98 an eine entsprechend konkav gestaltete Stirnseite 99 der Verschlusskappe 44 an, sodass die Seitenwände 82 und die Deckwand 80 der Verschlusskappe 44 bündig mit den Seitenwänden 94 und der Deckwand 96 der Abdeckkappe 46 abschließen.

An die Aussparungen 102 der Abdeckkappe 46 schließen sich zum wischarmseitigen Ende nach innen weisende Sicherungsnocken 104 an, die durch die Montagespalten 62 geschoben werden und in der Montageendposition in den Aufnahmeräumen 66 passend eingesetzt sind. Somit ergibt sich über die Sicherungsnocken 104, die Federarme 68 mit dem Tasten 70, die Aussparungen 84 in den Seitenwänden 82 der Verschlusskappe 44 und den Stirnseiten 98, 99 der Abdeckkappe 46 bzw. der Verschlusskappe 44 ein Verbund der zusammengefügten Teile 42, 44, 46 in Längsrichtung.

Am wischarmseitigen Ende besitzt die Abdeckkappe 46 ferner seitliche Verrastungsflügel 106. Diese weisen jeweils einen etwa quer zur Längsrichtung verlaufenden Anschlag 148 und eine Anschlagschräge 140 auf, wobei beide Anschlagflächen zur Verschlusskappe 44 weisen. Die Anschlagschräge 140 schließt mit dem Anschlag 148 einen stumpfen Winkel ein. An der wischarmseitigen Stirnseite 100 der Abdeckkappe 46 befindet sich eine Öffnung 108, durch die die Verbindungselemente 34, 36, 38 der Wischarme 22, 24, 26 montiert werden können. Im Bereich der Öffnung 108 ist an der Abdeckkappe 46 eine Rastnase 110 angebracht, die zur Montage des fünften Wischarms 26 erforderlich ist.

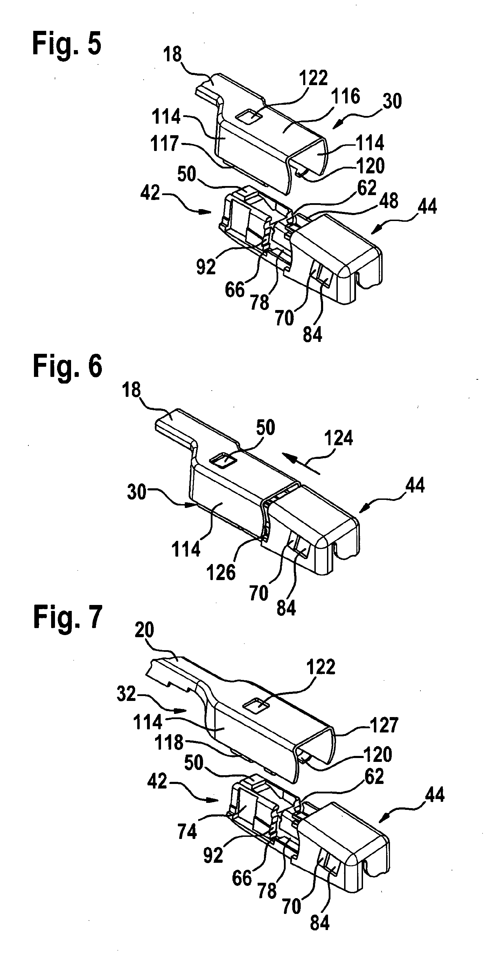

Fig. 5 und Fig. 6 zeigen die Montage des ersten Wischarms 18 an einen erfindungsgemäßen Adapter 16. Hierfür ist nur das Basiselement 42 und die Verschlusskappe 44 erforderlich. In der Ausgangsposition ist die Verschlusskappe 44 in Längsrichtung 124 bis an den Anschlag 72 geschoben, sodass die Montagespalten 62 frei sind. Dadurch kann das erste Verbindungselement 30 des ersten Wischarms 18 in Richtung einer Hochachse über die Seitenwände 48 des Basiselements 42 geschoben werden, wobei die Sicherungsnocken 120 in die Montagespalten 62 eingreifen und in der Endposition in den Aufnahmeräumen 66 am Ende der Montagespalten 62 liegen. In dieser Position stützen sich erste Spielausgleichsrippen 117 der Seitenwände 114 des ersten Verbindungselements 30 an dem Boden 56 bzw. an der Führungskante 76 ab. Gleichzeitig liegen sie spielfrei an den ersten Spielausgleichsflächen 47 an und gewähren somit eine gute seitliche Führung. Die Seitenwände 114 sind durch eine Deckwand 116 miteinander verbunden.

In einem zweiten Schritt wird die Verschlusskappe 44 in Längsrichtung 124 auf den ersten Wischarm 18 zu verschoben, bis die Taste 70 an den Federarmen 68 von innen in die als Öffnungen ausgebildeten Aussparungen 84 der Seitenwände 82 der Verschlusskappe 44 einrasten. Die Endposition ist in Fig. 2 dargestellt. In diesem Zustand unterbrechen die Riegel 78 die Montagespalten 62, sodass die Sicherungsnocken 120 in den Aufnahmeräumen 66 gefangen sind. Gleichzeitig rastet die Spielausgleichstaste 50 in eine entsprechende Öffnung 122 des ersten Verbindungselements 30 ein, wodurch das Verbindungselement 30 über seine Stirnkanten 126, die Verschlusskappe 44 und die Federarme 68 mit den Tasten 70 weit gehend spielfrei gehalten wird. Die Spielausgleichstaste 50 kann auch als weitere Sicherung dienen. Hierzu besitzt sie an der den Federarmen 68 zugewandten Seite eine Rastkante 65.

Während bei der Ausführung nach Fig. 5 und 6 der erste Wischarm 18 oberhalb des Wischblatts 10 aber seitlich versetzt zu diesem verläuft, verläuft der zweite Wischarm 20 oberhalb des Wischblatts 10 (Fig. 2, Fig. 7). Das zweite Verbindungselement 32 des zweiten Wischarms 20 ist ähnlich aufgebaut wie das erste Verbindungselement 30 des ersten Wischarms 18 und wird in gleicher Weise montiert, wobei die Sicherungsnocken 120 ebenfalls in die Aufnahmeräume 66 eingeführt werden. Im Unterschied zum ersten Wischarm 18 besitzt das zweite Verbindungselement 32 des zweiten Wischarms 20 an den freien Längsseiten der Seitenwände 114 zweite Spielausgleichsrippen 118, die in die Spielausgleichsnischen 74 an den Außenseiten der Seitenwände 48 passen und das seitliche Spiel des Wischblatts 10 minimieren. Im montierten Zustand liegen die konvexen Stirnseiten 127 des zweiten Verbindungselements 32 an den konkaven Stirnseiten 99 der Verschlusskappe 44 bündig an.

Der dritte Wischarm 22 besitzt ein angeformtes, im Querschnitt u-förmiges drittes Verbindungselement 34, das zwei Seitenwände 132 besitzt, die durch eine Deckwand 134 miteinander verbunden sind. An der Stirnseite der Deckwand 134 ist eine Zunge 128 mit einem Loch 130 angeformt. In Längsrichtung zum dritten Wischarm 22 hin versetzt sind an den freien Längskanten der Seitenwände 132 Vorsprünge 136 angeformt, deren wischarmseitige Begrenzung eine Hinterschneidung 138 bildet.

Bei der Montage ist der Adapter 16 etwa parallel zum Wischblatt 10 ausgerichtet. Das dritte Verbindungselement 34 wird durch die wischarmseitige Öffnung 108 in die Abdeckkappe 46 geschoben, wobei die Zunge 128 den Rastnocken 154 der Abdeckkappe 46 und die Spielausgleichstaste 50 des Basiselements 42 nach unten drückt. Gleichzeitig werden die seitlichen Verrastungsflügel 106 durch die Seitenwände 132 elastisch nachgiebig nach innen gedrückt, bis die vordere Stirnseite 127 des dritten Verbindungselements 34 an den Absätzen 69 der Federarme 68 anschlägt und die Verrastungsflügel 106 seitlich in die Hinterschneidungen 138 des dritten Verbindungselements 34 einrasten. Dabei liegen die Anschlagsschrägen 140 der Verrastungsflügel 106 an den gegenüberliegenden Kanten der Hinterschneidungen 138 des dritten Verbindungselements 34 an, sodass das dritte Verbindungselement 34 in Längsrichtung 124 zwischen den Absätzen 69 einerseits und den Anschlagschrägen 140 andererseits gehalten ist. Zur seitlichen Führung des Wischblatts 10 liegen die Innenseiten der Seitenwände 132 des dritten Verbindungselements 34 annähernd spielfrei an den Spielausgleichsflächen 47 bzw. 49 des Basiselements 42 an.

Der vierte Wischarm 24 besitzt ebenfalls ein angeformtes viertes Verbindungselement 36. Dieses unterscheidet sich von dem dritten Verbindungselement 34 durch die Form der seitlichen Vorsprünge 144, die wischarmseitige Anschlagkanten 146 besitzen, die im Wesentlichen senkrecht zur Längsrichtung 124 verlaufen und mit den ebenfalls senkrecht zur Längsrichtung 124 verlaufenden Anschlägen 148 der Verrastungsflügel 106 zusammenwirken. Im Übrigen ist die Montage die gleiche wie bei dem dritten Wischarm 22, wobei die Stirnseite 129 des vierten Verbindungselements 36 in montierter Stellung an den Absätzen 69 der Federschiene 68 und die Seitenwand 132 des vierten Verbindungselements 36 annähernd spielfrei an den Spielausgleichsflächen 47 bzw. 49 des Basiselements 42 anliegen.

Der fünfte Wischarm 26 hat im Wesentlichen die Gestalt einer Wischstange mit einem rechteckigen Querschnitt. Sein fünftes Verbindungselement 38 ist angeformt und besitzt ein freies Ende mit einer Kröpfung 150. In Längsrichtung 124 zum Wischarm 26 hin versetzt, befindet sich ein Rastloch 152, das in der Endposition, wenn die Stirnseite 151 des gekröpften fünften Verbindungselements 38 an einem Anschlag 142 an der Innenseite der Stirnwand der Verschlusskappe 44 anstößt, mit dem Rastnocken 154 der Abdeckkappe 46 verrastet. Bei der Montage wird das fünfte Verbindungselement 38 durch die Öffnung 108 der Abdeckkappe 46 geschoben, wobei das freie Ende mit der Kröpfung 150 zunächst den Rastnocken 154 und die Spielausgleichstaste 50 zurückdrückt.

Der sechste Wischarm 28 stellt über sein angeformtes Verbindungselement 40 einen so genannten Sidelockanschluss zum Wischblatt 10 dar, bei dem der Wischarm 28 seitlich versetzt zum Wischblatt 10 verläuft. Das sechste Verbindungselement 40 besitzt ein im Wesentlichen u-förmiges Querschnittprofil, das von zwei Seitenwänden 156 und einer Deckwand 158 gebildet wird, die die beiden Seitenwände 156 miteinander verbindet. In den beiden Seitenwänden 156 ist ein Lagerzapfen 164 eingenietet. Der Nietkopf ist mit 166 bezeichnet. Der Lagerzapfen 164 wird in einer um 90 Grad geschwenkten Lage des Wischblatts 10 durch die Lageröffnung 168 in die Seitenwand der Abdeckkappe 46 in die offene Nabe 54 des Basiselements 42 geschoben und durch die klippartig geformten Montagespalten 62 gehalten. In Längsrichtung 124 zum sechsten Wischarm 28 versetzt ist auf der Seite des Adapters 16 eine Brücke 160 an dem sechsten Verbindungselement 40 angeformt, die die Abdeckkappe 46 übergreift und mit einem abgewinkelten Ende 162 den Adapter 16 hält, wenn das Wischblatt 10 in seine Ausgangslage zurückgeschwenkt wird.

Während der dritte bis sechste Wischarm 22, 24, 26, 28 mit den entsprechenden Verbindungselementen 34, 36, 38, 40 montiert werden können, wenn der Adapter 16 im Wesentlichen parallel zum Wischblatt 10 verläuft, wird der Adapter 16 zur Montage des ersten oder zweiten Wischarms 18, 20 um einen Winkel α, vorzugsweise zwischen 4° und 8°, zum freien Ende des Wischblatts 10 gedreht. Durch den unterschiedlichen Montagewinkel α erhält man einen ausreichenden Freiraum für die Montage des ersten und zweiten Wischarms 18, 20 und, um die dritten bis fünften Verbindungselemente 34, 36, 38 der dritten bis fünften Wischarme 22, 24, 26 durch die stirnseitige Öffnung 108 in den Adapter 16 einzuführen und die Spielausgleichstaste 50 nach unten zu drücken.

## Patentansprüche

1. Adapter (16) zum Verbinden eines Verbindungselements (30, 32, 34, 36, 38, 40) am Ende eines Wischarms (18, 20, 22, 24, 26, 28) mit einem Wischblatt (10) insbesondere in Flachbalkenbauweise, wobei der Adapter (16) ein Basiselement (42) und eine Verschlusskappe (44) besitzt, wobei das Basiselement (42) ein u-förmiges, aus einem Boden (56) und zwei Seitenwänden (48) gebildetes Querschnittprofil aufweist, das an seiner dem Wischarm (18, 20, 22, 24, 26, 28) abgewandten Stirnseite von der Verschlusskappe (44) abgeschlossen ist, und an seinen Seitenwänden (48) Federarme (68) angeformt sind, die sich in Längsrichtung (124) zur Verschlusskappe (44) erstrecken, in diese eingreifen können, **dadurch gekennzeichnet, dass** in Seitenwänden (82) der Verschlusskappe (44) Aussparungen (84) vorgesehen sind, in dieTasten (70) an den Federarmen (68) einrasten, und dass an den Innenseiten der Seitenwände (82) der Verschlusskappe (44) längs gerichtete Riegel (78) angeordnet sind, die in Aussparungen (60) der Seitenwände (48) des Basiselements (42) bei gelösten Tasten (70) verschiebbar geführt sind und im geschlossenen Zustand quer verlaufende Montagespalte (62) unterbrechen sowie Aufnahmeräume (66) für Sicherungsnocken (104, 120) abschließen.

2. Adapter (16) nach Anspruch 1, **dadurch gekennzeichnet, dass** die Riegel (78) im geschlossenen Zustand mit ihren freien Enden in Aussparungen (92) an den den Stirnseiten (90) der Riegel (78) gegenüberliegenden Seiten der Montagespalten (62) eingreifen.

3. Adapter (16) nach Anspruch 2, **dadurch gekennzeichnet, dass** die Aussparungen (92) an einem ihrer Ränder eine Raste (64) besitzen, die mit einer Rastkante (65) am Rand der Stirnseite (90) des Riegels (78) verrastet.

4. Adapter (16) nach einem der vorhergehenden Ansprüche, **dadurch gekennzeichnet, dass** an den Federarmen (68) Anschläge (72) vorgesehen sind, die die Öffnungsbewegung der Verschlusskappe (44) begrenzen.

5. Adapter (16) nach Anspruch 4, **dadurch gekennzeichnet, dass** die Federarme (68) relativ zu den Seitenwänden (48) nach außen versetzt verlaufen und Absätze (69) bilden, die als Anschläge für Stirnseiten (127, 129) des dritten oder vierten Verbindungselements (34, 36) dienen.

6. Adapter (16) nach einem der vorhergehenden Ansprüche, **dadurch gekennzeichnet, dass** das Basiselement (42) im Bereich seiner Stirnseite, die dem Wischarm (18, 20, 22, 24, 26, 28) zugewandt ist, eine Spielausgleichstaste (50) besitzt, die über eine Federzunge (52) mit einem Zwischenboden (58) verbunden ist, der die beiden Seitenwände (48) des Basiselements (42) verbindet.

7. Adapter (16) nach Anspruch 6, **dadurch gekennzeichnet, dass** die Spielausgleichstaste (50) an der den Federarmen (68) zugewandten Seite eine Rastkante (65) aufweist und als weiteres Sicherungsmittel für das erste und zweite Verbindungselement (30, 32) des ersten bzw. zweiten Wischarms (18, 20) dient.

8. Adapter (16) nach Anspruch 6 oder 7, **dadurch gekennzeichnet, dass** das Basiselement (42) im Bereich der Spielausgleichstaste (50) eine Spielausgleichsnische (74) an den Außenseiten der Seitenwände (48) besitzt.

9. Adapter (16) nach einem der Ansprüche 6 bis 8, **dadurch gekennzeichnet, dass** das Basiselement (42) im Bereich der Federzunge (52) Spielausgleichsflächen (47, 49) besitzt, die vom Boden (56) aus zur oberen Kante der Seitenwände (48) etwas nach innen geneigt verlaufen.

10. Adapter (16) nach einem der vorhergehenden Ansprüche, **dadurch gekennzeichnet, dass** die zum Wischarm (18, 20, 22, 24, 26, 28) weisenden Stimseiten (99) der Seitenwände (82) der Verschlusskappe (44) konkav ausgebildet sind und als Anschläge für das erste oder zweite Verbindungselement (30, 32) des ersten bzw. zweiten Wischarms (18, 20) oder einer Abdeckkappe (46) dienen können.

11. Adapter (16) nach einem der vorhergehenden Ansprüche, **dadurch gekennzeichnet, dass** die Abdeckkappe (46) ein u-förmiges, von einer Deckwand (96) und zwei Seitenwänden (94) gebildetes Querschnittprofil aufweist und mit ihren Seitenwänden (94) und ihrer Deckwand (96) das Basiselement (42) seitlich und von oben umfasst und mit ihren konvexen Stirnseiten (98) ihrer Seitenwände (94) an die gegenüberliegenden konkaven Stirnseiten (99) der Seitenwände (82) der Verschlusskappe (44) bündig anschließt, wobei im montierten Zustand Sicherungsnocken (104) an den Innenseiten der Seitenwände (94) der Abdeckkappe (46) in die Aufnahmeräume (66) am Ende der Montagespalten (62) eingreifen und die dem Wischarm (18, 20, 22, 24, 26, 28) zugewandte Stirnseite (100) der Abdeckkappe (46) eine Öffnung (108) aufweist.

12. Adapter (16) nach Anspruch 11, **dadurch gekennzeichnet, dass** die Abdeckkappe (46) an ihrem dem Wischarm (18, 20, 22, 24, 26, 28) zugewandten Ende seitliche, nach innen federnd nachgiebige Verrastungsflügel (106) aufweist, die zur Verschlusskappe (44) weisende Anschlagschrägen (140) und etwa senkrecht zur Längsrichtung (124) verlaufende Anschläge (142) besitzen.

13. Adapter (16) nach Anspruch 11, **dadurch gekennzeichnet, dass** die Abdeckkappe (46) im Bereich ihrer stirnseitigen Öffnung (108) einen Rastnocken (154) besitzt.

14. Adapter (16) nach einem der vorhergehenden Ansprüche, **dadurch gekennzeichnet, dass** an der Innenseite der Stirnwand (86) der Verschlusskappe (44) ein Anschlag (142) für die Stirnseite (151) des fünften Verbindungselements (38) vorgesehen ist.

15. Adapter (16) nach einem der vorhergehenden Ansprüche, **dadurch gekennzeichnet, dass** er zur Montage des ersten oder zweiten Wischarms (18, 20) mit dem ersten bzw. zweiten Verbindungselement (30, 32) im Vergleich zur Montage des dritten, vierten, fünften oder sechsten Wischarms (22, 24, 26, 28) mit dem dritten, vierten, fünften oder sechsten Verbindungselement (34, 36, 38, 40) eine gegenüber dem Wischblatt (10) um einen Winkel (α) zum freien Ende des Wischblatts (10) gedrehte Position einnimmt.

16. Adapter (16) nach Anspruch 15, **dadurch gekennzeichnet, dass** der Winkel (α) im Bereich zwischen 4° und 8° liegt.

17. Adapter (16) nach einem der vorhergehenden Ansprüche, **dadurch gekennzeichnet, dass** das Basiselement (42) eine nach oben offene Nabe (54) besitzt, die von den Seitenwänden (48) des Basiselements (42) überragt wird, wobei die Seitenwände (48) im Bereich der Nabe (54) klippartig ausgebildet sind und die Abdeckkappe (46) mindestens in einer Seitenwand (94) eine Lageröffnung (168) besitzt.

## Claims

1. Adaptor (16) for connecting a connecting element (30, 32, 34, 36, 38, 40) at the end of a wiper arm (18, 20, 22, 24, 26, 28) to a wiper blade (10), in particular of flat beam construction, wherein the adaptor (16) has a basic element (42) and a closure cap (44), wherein the basic element (42) has a U-shaped cross-sectional profile which is formed from a base (56) and two side walls (48), is closed on the end side thereof which faces away from the wiper arm (18, 20, 22, 24, 26, 28) by the closure cap (44) and spring arms (68) are integrally formed on the side walls (48) thereof, the spring arms extending in the longitudinal direction (124) with respect to the closure cap (44) and being able to engage in the latter, **characterized in that** side walls (82) of the closure cap (44) are provided with recesses (84) into which pushbuttons (70) on the spring arms (68) latch, and **in that** longitudinally directed bolts (78) are arranged on the inner sides of the side walls (82) of the closure cap (44), the bolts being guided displaceably in recesses (60) of the side walls (48) of the basic element (42) when pushbuttons (70) are released and, in the closed state, interrupting transversely running installation gaps (62) and closing off receiving spaces (66) for securing cams (104, 120).

2. Adaptor (16) according to Claim 1, **characterized in that**, in the closed state, the free ends of the bolts (78) engage in recesses (92) on those sides of the installation gaps (62) which are opposite the end sides (90) of the bolts (78).

3. Adaptor (16) according to Claim 2, **characterized in that** one of the borders of the recesses (92) has a latch (64) which latches with a latching edge (65) on the border of the end side (90) of the bolt (78).

4. Adaptor (16) according to one of the preceding claims, **characterized in that** stops (72) which limit the opening movement of the closure cap (44) are provided on the spring arms (68).

5. Adaptor (16) according to Claim 4, **characterized in that** the spring arms (68) run offset outwards relative to the side walls (48) and form shoulders (69) which serve as stops for end sides (127, 129) of the third or fourth connecting element (34, 36).

6. Adaptor (16) according to one of the preceding claims, **characterized in that** the basic element (42) has, in the region of the end side thereof which faces the wiper arm (18, 20, 22, 24, 26, 28), a play-compensating pushbutton (50) which is connected via a spring tongue (52) to an intermediate base (58) which connects the two side walls (48) of the basic element (42).

7. Adaptor (16) according to Claim 6, **characterized in that** the play-compensating pushbutton (50) has, on the side facing the spring arms (68), a latching edge (65) and serves as a further securing means for the first and second connecting elements (30, 32) of the first and second wiper arms (18, 20).

8. Adaptor (16) according to Claim 6 or 7, **characterized in that** the basic element (42) has, in the region of the play-compensating pushbutton (50), a play-compensating niche (74) on the outer sides of the side walls (48).

9. Adaptor (16) according to one of Claims 6 to 8, **characterized in that** the basic element (42) has, in the region of the spring tongue (52), play-compensating surfaces (47, 49) which run somewhat inwardly inclined from the base (56) to the upper edge of the side walls (48).

10. Adaptor (16) according to one of the preceding claims, **characterized in that** those end sides (99) of the side walls (82) of the closure cap (44) which point towards the wiper arm (18, 20, 22, 24, 26, 28) are formed concavely and can serve as stops for the first or second connecting element (30, 32) of the first or second wiper arm (18, 20) or of a covering cap (46).

11. Adaptor (16) according to one of the preceding claims, **characterized in that** the covering cap (46) has a U-shaped cross-sectional profile which is formed by a top wall (96) and two side walls (94) and, by means of the side walls (94) thereof and the top wall (96) thereof, surrounds the basic element (42) laterally and from above and, by means of the convex end sides (98) of the side walls (94) thereof, adjoins the opposite, concave end sides (99) of the side walls (82) of the closure cap (44) in a flush manner, wherein, in the fitted state, securing cams (104) on the inner sides of the side walls (94) of the covering cap (46) engage in the receiving spaces (66) at the end of the installation gaps (62), and that end side (100) of the covering cap (46) which faces the wiper arm (18, 20, 22, 24, 26, 28) has an opening (108).

12. Adaptor (16) according to Claim 11, **characterized in that** that end of the covering cap (46) which faces the wiper arm (18, 20, 22, 24, 26, 28) has lateral, inwardly resiliently flexible latching wings (106) which have stop slopes (140) pointing towards the closure cap (44) and stops (142) running approximately perpendicularly to the longitudinal direction (124).

13. Adaptor (16) according to Claim 11, **characterized in that** the covering cap (46) has a latching cam (154) in the region of the end-side opening (108) therein.

14. Adaptor (16) according to one of the preceding claims, **characterized in that** a stop (142) for the end side (151) of the fifth connecting element (38) is provided on the inner side of the end wall (86) of the closure cap (44).

15. Adaptor (16) according to one of the preceding claims, **characterized in that**, in comparison to the installation of the third, fourth, fifth or sixth wiper arm (22, 24, 26, 28) with the third, fourth, fifth or sixth connecting element (34, 36, 38, 40), said adaptor takes up a position relative to the wiper blade (10), which position is rotated by an angle (α) with respect to the free end of the wiper blade (10), in order to install the first or second wiper arm (18, 20) together with the first or second connecting element (30, 32).

16. Adaptor (16) according to Claim 15, **characterized in that** the angle (α) is within the range of between 4° and 8°.

17. Adaptor (16) according to one of the preceding claims, **characterized in that** the basic element (42) has an upwardly open hub (54), over which the side walls (48) of the basic element (42) protrude, wherein the side walls (48) are of clip-like design in the region of the hub (54), and the covering cap (46) has a bearing opening (168) at least in one side wall (94).

## Revendications

1. Adaptateur (16) pour raccorder un élément de raccordement (30, 32, 34, 36, 38, 40) situé à l'extrémité d'un bras d'essuie-glace (18, 20, 22, 24, 26, 28) à un balai d'essuie-glace (10), en particulier de structure à barre plate, l'adaptateur (16) possédant un élément de base (42) et un capuchon de fermeture (44), l'élément de base (42) présentant un profilé en section transversale en forme de U, formé d'un fond (56) et de deux parois latérales (48), qui est terminé par le capuchon de fermeture (44) au niveau de son côté frontal opposé au bras d'essuie-glace (18, 20, 22, 24, 26, 28), et des bras élastiques (68) étant façonnés au niveau de ses parois latérales (48), lesquels bras élastiques s'étendent dans la direction longitudinale (124) jusqu'au capuchon de fermeture (44) et peuvent venir en prise dans celui-ci, **caractérisé en ce que** dans les parois latérales (82) du capuchon de fermeture (44) sont prévus des évidements (84) dans lesquels s'encliquètent des touches (70) sur les bras élastiques (68), et **en ce qu'**au niveau des côtés intérieurs des parois latérales (82) du capuchon de fermeture (44) sont disposés des verrous (78) orientés longitudinalement, lesquels sont guidés de manière déplaçable dans des évidements (60) des parois latérales (48) de l'élément de base (42) lorsque les touches (70) sont relâchées et, dans l'état fermé, interrompent des fentes de montage s'étendant transversalement (62) et terminent des espaces de réception (66) pour des cames de fixation (104, 120).

2. Adaptateur (16) selon la revendication 1, **caractérisé en ce que** les verrous (78) dans l'état fermé viennent en prise avec leurs extrémités libres dans des évidements (92) sur les côtés des fentes de montage (62) opposés aux côtés frontaux (90) des verrous (78).

3. Adaptateur (16) selon la revendication 2, **caractérisé en ce que** les évidements (92) possèdent, au niveau de l'un de leurs bords, un cliquet (64) qui s'encliquète avec une arête d'encliquetage (65) sur le bord du côté frontal (90) du verrou (78).

4. Adaptateur (16) selon l'une quelconque des revendications précédentes, **caractérisé en ce que** des butées (72) sont prévues sur les bras de ressort (68), lesquelles limitent le mouvement d'ouverture du capuchon de fermeture (44).

5. Adaptateur (16) selon la revendication 4, **caractérisé en ce que** les bras de ressort (68) s'étendent de manière décalée vers l'extérieur par rapport aux parois latérales (48) et forment des épaulements (69) qui servent de butées pour des côtés frontaux (127, 129) du troisième ou du quatrième élément de raccordement (34, 36).

6. Adaptateur (16) selon l'une quelconque des revendications précédentes, **caractérisé en ce que** l'élément de base (42) possède, dans la région de son côté frontal qui est tourné vers le bras d'essuie-glace (18, 20, 22, 24, 26, 28), une touche de compensation du jeu (50) qui est raccordée par le biais d'une langue élastique (52) à un fond intermédiaire (58) qui raccorde les deux parois latérales (48) de l'élément de base (42).

7. Adaptateur (16) selon la revendication 6, **caractérisé en ce que** la touche de compensation du jeu (50) présente, au niveau du côté tourné vers les bras élastiques (68), une arête d'encliquetage (65) et sert de moyen de fixation supplémentaire pour le premier et le deuxième élément de raccordement (30, 32) du premier ou du deuxième bras d'essuie-glace (18, 20).

8. Adaptateur (16) selon la revendication 6 ou 7, **caractérisé en ce que** l'élément de base (42) possède, dans la région de la touche de compensation du jeu (50), une niche de compensation du jeu (74) sur les côtés extérieurs des parois latérales (48).

9. Adaptateur (16) selon l'une quelconque des revendications 6 à 8, **caractérisé en ce que** l'élément de base (42) possède, dans la région de la langue élastique (52), des surfaces de compensation du jeu (47,49), qui s'étendent sous forme approximativement inclinée vers le bas depuis le fond (56) jusqu'à l'arête supérieure des parois latérales (48).

10. Adaptateur (16) selon l'une quelconque des revendications précédentes, **caractérisé en ce que** les côtés frontaux (99) tournés vers le bras d'essuie-glace (18, 20, 22, 24, 26, 28) des parois latérales (82) du capuchon de fermeture (44) sont réalisées sous forme concave et peuvent servir de butées pour le premier ou le deuxième élément de raccordement (30, 32) du premier ou du deuxième bras d'essuie-glace (18, 20) ou d'un capuchon de recouvrement (46).

11. Adaptateur (16) selon l'une quelconque des revendications précédentes, **caractérisé en ce que** le capuchon de recouvrement (46) présente un profilé en section transversale en forme de U, formé par une paroi de recouvrement (96) et par deux parois latérales (94) et entoure latéralement et par le haut l'élément de base (42) avec ses parois latérales (94) et sa paroi de recouvrement (96) et se raccorde en affleurement avec ses côtés frontaux convexes (98) de ses parois latérales (94) aux côtés frontaux concaves opposés (99) des parois latérales (82) du capuchon de fermeture (44), des cames de fixation (104) s'engageant dans l'état monté au niveau des côtés intérieurs des parois latérales (94) du capuchon de recouvrement (46) dans les espaces de réception (66) à l'extrémité des fentes de montage (62) et le côté frontal (100) du capuchon de recouvrement (46) tourné vers le bras d'essuie-glace (18, 20, 22, 24, 26, 28) présentant une ouverture (108).

12. Adaptateur (16) selon la revendication 11, **caractérisé en ce que** le capuchon de recouvrement (46) présente, à son extrémité tournée vers le bras d'essuie-glace (18, 20, 22, 24, 26, 28), des ailes d'encliquetage latérales (106) flexibles de manière élastique vers l'intérieur, qui possèdent des biseaux de butée (140) tournés vers le capuchon de fermeture (44) et des butées (142) s'étendant approximativement perpendiculairement à la direction longitudinale (124).

13. Adaptateur (16) selon la revendication 11, **caractérisé en ce que** le capuchon de recouvrement (46) possède, dans la région de son ouverture frontale (108), une came d'encliquetage (154).

14. Adaptateur (16) selon l'une quelconque des revendications précédentes, **caractérisé en ce qu'**une butée (142) pour le côté frontal (151) du cinquième élément de raccordement (38) est prévue sur le côté intérieur de la paroi frontale (86) du capuchon de fermeture (44).

15. Adaptateur (16) selon l'une quelconque des revendications précédentes, **caractérisé en ce qu'**il adopte, pour le montage du premier ou du deuxième bras d'essuie-glace (18, 20) avec le premier ou le deuxième élément de raccordement (30, 32) par comparaison avec le montage du troisième, du quatrième, du cinquième ou du sixième bras d'essuie-glace (22, 24, 26, 28) avec le troisième, quatrième, cinquième ou sixième élément de raccordement (34, 36, 38, 40), une position tournée par rapport au balai d'essuie-glace (10) d'un angle (α) par rapport à l'extrémité libre du balai d'essuie-glace (10).

16. Adaptateur (16) selon la revendication 15, **caractérisé en ce que** l'angle (α) est compris dans la plage de 4° à 8°.

17. Adaptateur (16) selon l'une quelconque des revendications précédentes, **caractérisé en ce que** l'élément de base (42) possède un moyeu (54) ouvert vers le haut, qui est dépassé par les parois latérales (48) de l'élément de base (42), les parois latérales (48) étant réalisées dans la région du moyeu (54) en forme de pince et le capuchon de recouvrement (46) possédant au moins dans une paroi latérale (94) une ouverture de palier (168).
